(19) Europäisches Patentamt
European Patent Office
Office européen des brevets

(11) **EP 1 412 631 B1**

(12) **EUROPÄISCHE PATENTSCHRIFT**

(45) Veröffentlichungstag und Bekanntmachung des Hinweises auf die Patenterteilung:
**10.11.2004 Patentblatt 2004/46**

(21) Anmeldenummer: 02748687.7

(22) Anmeldetag: **03.05.2002**

(51) Int Cl.⁷: **F02K 9/97**

(86) Internationale Anmeldenummer:
**PCT/EP2002/004842**

(87) Internationale Veröffentlichungsnummer:
**WO 2002/092988 (21.11.2002 Gazette 2002/47)**

(54) **VERFAHREN ZUR VERLÄNGERUNG EINER DÜSE UND VERLÄNGERBARE DÜSE FÜR RAKETENTRIEBWERKE**

METHOD FOR EXTENDING A NOZZLE AND EXTENDED NOZZLE FOR ROCKET DRIVES

PROCEDE POUR ALLONGER UNE TUYERE ET TUYERE ALLONGEABLE POUR MOTEUR-FUSEE

(84) Benannte Vertragsstaaten:
**DE FR IT SE**

(30) Priorität: **15.05.2001 DE 10123731**

(43) Veröffentlichungstag der Anmeldung:
**28.04.2004 Patentblatt 2004/18**

(73) Patentinhaber: **EADS Space Transportation GmbH**
**81663 München (DE)**

(72) Erfinder:
• **HAGEMANN, Gerald**
**85635 Höhenkirchen/Siegertsbrunn (DE)**
• **TERHARDT, Michael**
**80993 München (DE)**

(74) Vertreter: **Ulrich, Thomas**
**c/o EADS Deutschland GmbH,**
**Patentabteilung**
**81663 München (DE)**

(56) Entgegenhaltungen:
EP-A- 0 661 436       FR-A- 2 622 931
US-A- 3 394 549       US-A- 4 383 407
US-A- 4 387 564       US-A- 4 947 644

• HAGEMANN G ET AL: "ADVANCED ROCKET NOZZLES" JOURNAL OF PROPULSION AND POWER, AMERICAN INSTITUTE OF AERONAUTICS AND ASTRONAUTICS. NEW YORK, US, Bd. 14, Nr. 5, 1. September 1998 (1998-09-01), Seiten 620-634, XP000778443 ISSN: 0748-4658

## Beschreibung

Die vorliegende Erfindung betrifft ein Verfahren zur Verlängerung einer Düse für ein Raketentriebwerk sowie eine verlängerbare Düse für ein Raketentriebwerk

In heute im Einsatz befindlichen Raketentriebwerken werden meist Düsen eingesetzt, die eine kontinuierliche Düsenkontur aufwesen, sogenannte Glokkendüsen. Die Leistung dieser Triebwerke ist jedoch während eines Aufstiegs des entsprechenden Flugkörpers oder Raumfahrzeuges in höheren Flughöhen durch die festgelegte Düsenkontur beschränkt. Eine ideale "höhenanpassbare" Düse würde das Flächenverhältnis und damit die Düsenkontur während des Aufstiegs an die jeweilige Flughöhe so angleichen, dass der mittlere Düsendruck in der Austrittsdüse am Düsenende stets mit dem Umgebungsdruck übereinstimmt ("angepasste" Düse). Als mittlerer Düsendruck wird dabei der über den Düsenquerschnitt eindimensionnal oder zweidimensional gemittelte Düsendruck durch die Düse ausgestoßenen Antriebsstoffe herangezogen. Dies würde zu einer vollfließenden Düse mit ständig optimalem spezifischen Impuls während des Aufstiegs führen. Eine Realisierung ist jedoch bislang aus technischen Gründen nicht möglich.

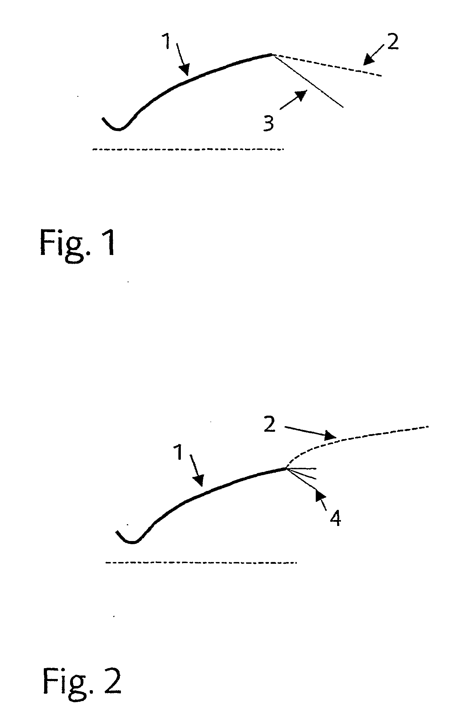

Aufgrund ihrer festgelegten Düsengeometrie erreichen konventionelle Triebwerke ihre optimale Leistung nur an einem bestimmten Punkt der Flugtrajektorie. Unterhalb dieses Punktes ist die Düsenströmung überexpandiert (der Umgebungsdruck ist in niedriger Höhe größer als der mittlere Düsendruck der durch die Düse ausgestoßenen Antriebsstoffe am Ende der Düse); oberhalb des Optimalpunktes ist die Strömung unterexpandiert (der Umgebungsdruck ist kleiner als der mittlere Düsendruck der durch die Düse ausgestoßenen Antriebsstoffe am Ende der Düse). Die aus der Düse ausgestoßenen Antriebsstoffe bilden nach dem Verlassen der Düse den sogenannten Freistrahl, der je nach den Druckverhältnissen im Vergleich zum Düsen-Endquerschnitt eingeschnürt oder aufgeweitet ist. Dies ist auch in den Fig. 1 und 2 dargestellt. Aus diesem Grund muss bei Triebwerken mit solchen Düsen ein Kompromiss zwischen der Triebwerksleistung in Meereshöhe und der Triebwerksleistung in höheren Flughöhen, insbesondere im Vakuum des Weltraumes bei Triebwerken für Raumfahrzeuge, gefunden werden um die Nutzlast bei gegebener Mission zu maximieren. Diese Probleme sind beispielsweise in US 3,394,549 sowie in J. E. Beck and M. D. Horn, "Altitude Compensating Nozzles", Rockwell Threshold, Summer 1995, S. 38 bis 44 diskutiert.

Eine weitere Begrenzung der Triebwerksleistung ist durch die Anforderung an die vollfließende Düse in Meereshöhe zur Vermeidung von Seitenlasten (seitliche Krafteinwirkungen) auf die Düsenkontur gegeben. Die Seitenkräfte treten bei einer konventionellen Glockendüse immer dann auf, wenn sich die wandnahe Strömung der durch die Düse ausgestoßenen Antriebsstoffe aufgrund des zu hohen Umgebungsdrucks vom Düsenende her von der Düsenkontur ablöst und Luft aus der Umgebung in die Düse einströmt. Aufgrund des turbulenten und damit instationären Verhaltens des Strömungsfeldes in diesem Bereich treten selbst bei einer perfekt achsensymmetrischen Konfiguration der Düsenkontur, der Zuströmung der durch die Düse auszustoßenden Antriebsstoffe innerhalb der Düse sowie der Umgebungsbedingungen Seitenkräfte auf. Zusätzliche Seitenkräfte werden hervorgerufen, wenn die Verhältnisse nicht dem achsensymmetrischen Idealfall entsprechen. Um diese Seitenlasten am Boden und während der ersten Phase des Aufstiegs des Flugkörpers bzw. des Raumfahrzeuges zu vermeiden, wird bei allen existierenden Triebwerken am Boden eine sogenannte vollfließende Düse gefordert. Der Wanddruck am Düsenende muss dabei genügend hoch sein, so dass ein Ablösen der Strömung von der Düsenkontur vermieden wird. Dadurch wird jedoch das maximal zulässige Flächenverhältnis und damit die Triebwerksleistung in größeren Flughöhen, insbesondere im Vakuum bei Anwendung des Raketentriebwerkes für Raumfahrzeuge, begrenzt.

Eine erhöhte Vakuumleistung von Bodentriebwerken mit Glockendüse kann durch die Verwendung von Düsen mit kontrollierter Strömungsablösung aufgrund eines größeren realisierbaren Flächenverhältnisses erzielt werden. Ein Konzept zur "Höhenanpassung" der Düsen ist durch kontrollierte Strömungsablösung in der Düse erreichbar. Dabei werden die Seitenlasten sowie der Schubverlust durch Überexpansion in niedrigen Flughöhen während des ersten Teils der Flugtrajektorie reduziert.

Diese Konzepte verwenden verschiedene Techniken zur Erzeugung einer möglichst symmetrischen Strömungsablösung. Derartige Methoden sind beispielsweise die aktive axialsymmetrische Einspritzung von Sekundärgasen oder die passive axialsymmetrische Belüftung der Düse mit Umgebungsluft. Die Strömung kann auch aktiv durch die Anbringung von zusätzlichen Bauteilen wie Stolperdrähten, ablatierenden Einsätzen oder einem während des Fluges abzuwerfenden Diffusor am Düsenaustritt zur Ablösung gebracht werden. Solche Vorschläge sind beispielsweise in R. H. Schmucker, "Side loads and their reduction in liquid rokket engines", Bericht TB-14, 24th International Astronautical Congress, Baku, USSR, October 7 bis 13, 1973 beschrieben. Es wurden auch andere Konzepte bislang bekannt, die eine strömungskontrollierte Ablösung rein über das Konturdesign mit einer unveränderlichen Struktur der Düsenkontur ohne bewegliche Teile erreichen. Dies sind das Konzept der sogenannten Dual Bell-Düse sowie ein Polygondüsen-Konzept.

Bei der Dual Bell-Düse wird eine kontrollierte Ablösung über eine unstetige Düsenkontur, d.h. einen Konturknick, erreicht. Solche Düsen sind beispielsweise aus der eingangs genannten US 3,394,549 sowie aus J. E. Beck and M. D. Horn, "Altitude Compensating Nozzles", Rockwell Threshold, Summer 1995, S. 38 bis 44 bekannt. Die Düse weist dabei einen ersten Bereich mit einer ersten Kontur und einen zweiten Bereich mit einer zweiten Kontur auf, der an den ersten Bereich anschließt. Der Konturknick erzeugt während des Trägeraufstiegs zwei verschiedene Zustände für die Strömung der durch die Düse ausgestoßenen Antriebsstoffe. Im Bodenmodus (geringe Höhe und hoher Umbebungsdruck) liegt die Strömung nur im ersten Bereich an der Düsenkontur an und es tritt symmetrische Strömungsablösung am Konturknick (also am Ende des ersten Bereiches) und vollständigen Strömungsablösung dahinter (also im zweiten Bereich) auf. Es bildet sich also im zweiten Bereich ein Freistrahl aus. Aufgrund der kontrollierten und symmetrischen Strömungsablösung am Konturlmick werden die Seitenlasten in niedrigen Flughöhen reduziert. Der beim Aufstieg des Flugkörpers bzw. Raumfahrzeuges abnehmende Umgebungsdruck fällt in einer bestimmten Höhe unter einen kritischen Wert und die Strömung legt sich auch im zweiten Bereich an die Wand an. Folglich liegt ab dieser Höhe die Strömung in der gesamten Düse vollständig an der Düsenkontur an.

Das Konzept der Polygondüse ist beispielsweise in WO 97/29277 beschrieben. Bei diesem Konzept wird ab einem bestimmten Flächenverhältnis eine Kontur mit einer polygonförmigen Querschnittsfläche (ca. 5 bis 7 Kanten) verwendet. Dabei sollen die einzelnen Segmente durch die unterschiedliche Entspannung der Brenngase von den Ecken zur Mitte der Kanten strömungsdynamisch entkoppelt werden, um die Wanddruckkorrelationen in Umfangsrichtung zu verringern und die aerodynamischen Seitenlasten zu reduzieren. Außerdem soll die Anfälligkeit auf eine aeroelastische Kopplung zwischen Ablösung und mechanischen Schwingungen reduziert werden.

Das Dual Bell-Konzept und des Polygon-Konzepts bietet zwar den Vorteil einer konstruktiven Einfachheit, da keine zusätzlichen mechanischen bzw. beweglichen Bauteile benötigt werden. Ein Nachteil dieser Düsenkonzepte bestehen jedoch in der großen Baulänge solcher Düsenstrukturen, die in Abhängigkeit von bestimmten Konfigurationen des entsprechenden Flugkörpers bzw. Raumfahrzeuges zu Konflikten mit zulässigen Einbaumaßen führen kann. Außerdem ist die große Baulänge bei großer Strukturfläche empfindlich gegenüber Druckpulsationen (buffeting), die von der Außenströmung hervorgerufen werden und die hohe seitliche mechanische Belastungen auf der Außenhaut, beziehungsweise auf der Innenwand der Düse im Bereich der abgelösten Strömung hervorrufen können.

Eine Möglichkeit zur Realisierung von hohen Flächenverhältnissen in großen Flughöhen, insbesondere im Vakuum, stellen die sogenannten verlängerbaren Düsen (Extendible Nozzle) dar. Die Düsenkontur besteht in der Regel hierbei aus zwei Teilen, der untere, strömungsabwärtige Teil wird in großer Höhe ausgefahren oder entfaltet und an das Ende des oberen Teils angekoppelt. Solche verlängerbare Düsen sind beispielsweise in US 4,947,644, US 4,383,407 sowie in J. E. Beck and M. D. Horn, "Altitude Compensating Nozzles", Rockwell Threshold, Summer 1995, S. 38 bis 44 beschrieben. Die US 4,947,644 zeigt dabei insbesondere eine Düsenstruktur, bei der durch Entfalten von Einzelelementen eine diskontinuierliche Düsenkontor erzeugt wird. Problematisch dabei ist jedoch, dass bei eines solchen Verlängerung der Düsenkontur während des Verlängerungsvorganges hohe Seitenlasten und Wärmelasten an dem auszufahrenden oder zu entfaltenden Teil der Düsenkontur auftreten können, wenn diese in den Bereich des Freistrahls des Triebwerkes gelangt. Dies ist insbesondere bei dem technischen Konzept der US 4,947,644 problematisch.

Verlängerbare Düsen sind auch im G. Hagemann, " Advanced Rocket Nozzle", Journal of propulsion and power, American institute of aeronautics and astronautics, New York, US, vol. 14 n₀ 5, 1. September 1998, pages 620-634 beschrieben.

Aufgabe der vorliegenden Erfindung ist es daher, eine Möglichkeit bereitzustellen, die eine verbesserte Anpassung einer Düse eines Raketentriebwerkes an unterschiedliche Flughöhen bei möglichst geringen Lasten für die Düsenstruktur bietet. Diese Aufgabe wird gelöst durch die Merkmale der Ansprüche 1 und 3.

Erfindungsgemäß ist ein Verfahren zur Verlängerung einer Düse für ein Raketentriebwerk vorgesehen, wobei mindestens ein zweiter Bereich der Kontur der Düse als Verlängerung eines ersten Bereiches der Kontur der Düse angeordnet wird. Es ist also eine sogenannte verlängerbare Düse (Extendible Nozzle) vorgesehen. Es erfolgt nun die Verlängerung des ersten Bereiches durch den zweiten Bereich in einer Flughöhe, in welcher der Umgebungsdruck kleiner ist als der mittlere Düsendruck der durch die Düse ausgestoßenen Antriebsstoffe am Ende des ersten Bereiches und die Kontur des Freistrahles des Raketentriebwerkes im wesentlichen der Kontur des zweiten Bereiches entspricht. Als mittlerer Düsendruck wird dabei der über den Düsenquerschnitt eindimensionnal oder zweidimensional gemittelte Düsendruck durch die Düse ausgestoßenen Antriebsstoffe herangezogen. Dies bedeutet, dass der erste Flugabschnitt bei geringer Überexpansion (am Boden) beziehungsweise geringer Unterexpansion (am Ende des ersten Flugabschnitts) durchgeführt wird, so dass die Kontur des mindestens einen zweiten Bereiches im Vergleich zum ersten Bereich aufgeweitet ist, womit der zweite Bereich folglich nicht eine beliebige Struktur aufweist, sondern eine solche, die im wesentlichen der Kontur des Freistrahles in der vorgesehenen Höhe entspricht. Im wesentlichen bedeutet dabei, dass die Kontur des zweiten Bereiches nicht exakt mit der Kontur des Freistrahles übereinstimmen muss. Es können vielmehr auch bei der Bestimmung der Kontur Interaktionseffekte wie der Ejektor-Effekt berücksichtigt werden, die auftreten, wenn beim Verlängern der Düse der zweite Bereich im Bereich des Freistrahls angeordnet wird. Diese Kontur kann beispielsweise im Rahmen von Tests oder durch Simulationen ermittelt werden. Durch die Anpassung der Kontur des mindestens einen zweiten Bereiches an die Kontur des Freistrahls und die Durchführung des Verlängerungsvorganges der Düse in demjenigen Bereich der Flugtrajektorie, in dem die Kontur des mindestens einen zweiten Bereiches mit derjenigen des Freistrahls im wesentlichen übereinstimmt, können die auftretenden Lasten, insbesondere Seitenlasten und Wärmelasten, deutlich verringert werden. Die Verlängerung der Düsenkontur in einer definierten Flughöhe trägt dabei zur Anpassung der Düse an die Gegebenheiten in höheren Flughöhen bei und erlaubt daher einen effektiveren Einsatz des Raketentriebwerkes. Während des ersten Flugabschnitts vom Boden bis zu der definierten Höhe tritt dann keine Strömungsablösung im ersten Bereich der Düsenkontur auf und das Raketentriebwerk operiert mit einem relativ geringen Flächenverhältnis. Nach Beendigung des ersten Flugabschnitts wird die Düse durch den mindestens einen zweiten Bereich verlängert, um in größerer Höhe, ggf. bis zum Vakuum, mit einem größeren Flächenverhältnis und damit verbesserter Leistung operieren zu können.

Die Verlängerung der Düse kann grundsätzlich durch unterschiedliche Verlängerungsmechanismen erfolgen, wie beispielsweise durch ein Entfalten oder Ausklappen. Bevorzugt kann auch ein Ausfahren des zweiten Bereiches in Längsrichtung der Düse vorgesehen werden, da gerade hierbei eine definierte Bewegung des mindestens eines zweiten Bereiches relativ zum ersten Bereich bei gleichzeitiger größtmöglicher mechanischer Stabilität garantiert werden kann und der mindestens einen zweiten Bereich bis zum Ende des Verlängerungsvorganges praktisch nicht in den Bereich des Freistrahls hineingreift. Dies verringert wiederum die entstehenden Lasten, die auf die Düse wirken.

Die vorliegende Erfindung umfasst weiterhin eine verlängerbare Düse für ein Raketentriebwerk, wobei die Kontur der Düse in Längsrichtung der Düse einen ersten Bereich mit einer ersten Kontur und mindestens einen zweiten Bereich mit einer zweiten Kontur aufweist und der mindestens eine zweite Bereich zur Verlängerung des ersten Bereiches unter Ausbildung einer diskontinuierlichen Düsenkontur ausgebildet ist.

Die Kontur des mindestens einen zweiten Bereiches ist dabei an die Kontur des Freistrahls in einer Flughöhe angepasst, in welcher der Umgebungsdruck kleiner ist als der Düsendruck der durch die Düse ausgestoßenen Antriebsstoffe und der mindestens eine zweite Bereich ist in Längsrichtung der Düse ausfahrbar ausgebildet. Als Ausfahrmechanismen können hierbei übliche Mechanismen vorgesehen werden, wie sie beispielsweise aus der US 4,383,407 bekannt sind.

Ein spezielles Ausführungsbeispiel der vorliegenden Erfindung wird nachfolgend anhand der Figuren 1 bis 3 beschrieben.

Es zeigen:

Fig. 1: Schematische Darstellung eines Abschnittes der Düsenkontur eines Raketentriebwerkes bei niedrigen Flughöhen mit Überexpansion der durch die Düse ausgestoßenen Antriebsstoffe;

Fig. 2: wie Fig. 1, jedoch für große Flughöhen mit Unterexpansion der durch die Düse ausgestoßenen Antriebsstoffe;

Fig. 3: Schematische Darstellung der erfindungsgemäßen Verlängerung der Düse durch Ausfahren eines zweiten Konturbereiches in einer Flughöhe mit Unterexpansion.

Im Folgenden wird das Konzept einer verlängerbaren Düse für ein Rakentriebwerk beschrieben, wobei die Düse einen ersten, festen Konturbereich und einen zweiten, ausfahrbaren Konturbereich aufweist. Ein solches Konzept ist insbesondere für die Anwendung bei einem Unterstufentriebwerk eines Raumfahrzeuges wie einer Trägerrakete anwendbar. Das Triebwerk könnte prinzipiell während des Ausfahrvorgangs abgeschaltet werden, was jedoch die Wiederzündung des Triebwerks mit einem erhöhten Versagensrisiko sowie einem erhöhten Entwicklungs- und Qualifikationsaufwand notwendig machen würde. Hinzu käme eine antriebslose Flugphase des Trägers was eine nichtoptimierte Flugtrajektorie zur Folge haben könnte. Deshalb ist das Ausfahren des zweiten Konturbereiches der Düse bei brennendem Triebwerk wünschenswert. Hierbei ist insbesondere die Interaktion des Freistrahls des Triebwerkes mit der Ausfahrdüse während des Ausfahrvorgangs kritisch. Insbesondere sind die mechanischen und thermischen Belastungen beim Anlegen des Freistrahls an die Wand des zweiten Bereiches im Rahmen des Ausfahrvorganges von Bedeutung. Diese können bisher nur durch aufwändige Konstruktion des gesamten Triebwerks aufgefangen werden, welche die Masse des Triebwerkes in unerwünschter Weise erhöhen.

In den Fig. 1 und 2 ist das Verhalten des Freistrahls eines Raketentriebwerkes in unterschiedlichen Flughöhen schematisch dargestellt. Es wird dabei jeweils eine Hälfte des ersten Bereiches 1 der Düsenkontur des Raketentriebwerkes im Querschnitt dargestellt. Dieser erste Bereich 1 ist unbeweglich mit dem übrigen Raketentriebwerk verbunden und weist eine glockenförmige Kontur auf. Weiterhin ist jeweils der Freistrahlrand 2, also die Begrenzung der Kontur des Freistrahls des Raketentriebwerkes dargestellt.

Fig. 1 zeigt die Verhältnisse in einer geringen Höhe H0, beispielsweise am Boden. Hier liegt eine Überexpansion vor, d.h. der mittlere Düsendruck $Pm,e$ der durch die Düse ausgestoßenen Antriebsstoffe in der Austrittsebene am Ende des ersten Bereiches ist kleiner als der Umgebungsdruck Pa

$$Pm,e < Pa$$

weshalb der Freistrahlrand 2 innerhalb der Verlängerung der Kontur des ersten Bereiches 1 der Düsenkontur verläuft. Der mittlere Düsendruck ergibt sich beispielsweise durch eine zweidimensionale Mittelung des Düsendruckes in der Austrittsebene. Es ergibt sich weiterhin innerhalb des Freistrahls eine Druckadaption durch einen Verdichtungsstoß 3, der in Fig. 1 schematisch dargestellt ist.

In Fig. 2 ist das Verhalten in einer großen Flughöhe H1, beispielsweise im Vakuum des Weltraumes, dargestellt. Hier liegt eine Unterexpansion vor, d.h. es gilt

$$Pm,e > Pa$$

Es erfolgt hier die Druckadaption durch eine Expansion der durch die Düse ausgestoßenen Antriebsstoffe, d.h. der Freistrahl fächert sich auf, schematisch dargestellt als Expansionsfächer 4. Der Freistrahlrand verläuft nun außerhalb der Verlängerung der Kontur des ersten Düsenbereiches 1.

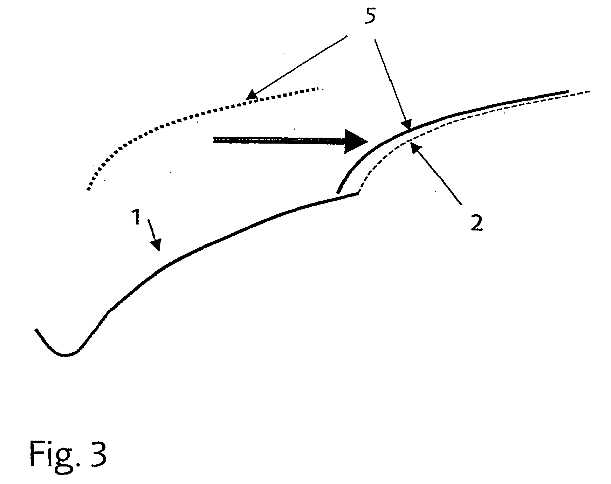

Fig. 3 zeigt das erfindungsgemäße Ausfahren einer Düsenverlängerung in Form eines zweiten Bereiches 5, der durch eine in Form eines Pfeiles dargestellte Längsverschiebung an das Ende des ersten Bereiches 1 verschoben wird.

Würde nun eine Düsenverlängerung wie in Fig. 3 dargestellt in einer Höhe H0 ausgefahren, so würde sich der Freistrahl durch den sogenannten Ejektoreffekt an die Wand des zweiten Bereiches 5 anlegen. Hierbei würden jedoch hohen Seitenlasten auftreten, da dieses Anlegen mit einer plötzlichen Aufweitung des Freistrahls verbunden wäre. Es könnte anschließend auch zu unkontrollierter Strömungsablösung von der Wand des zweiten Bereiches 5 kommen, was wiederum zu entsprechend hohen Lasten auf das Triebwerk führen würde. Außerdem würde nach Ausfahren des zweiten Bereiches in einer solchen Flughöhe bei gleichbleibenden operationellen Bedingungen des Triebwerks zunächst ein zusätzlicher Widerstand erzeugt, da der Umebungsdruck höher als der Düsendruck im zweiten Bereich 5 wäre.

Der zweite Bereich 5, der als Verlängerung der Düse dient, kann jedoch bereits unmittelbar nach erfolgtem Ausfahren zusätzlichen Schub erzeugen, wenn dieser zweite Bereich 5 in einer Höhe entsprechend H1 ausgefahren wird, da dann eine Düsenkontur mit einem Düsendruck größer als der Umgebungsdruck realisiert werden kann. Würde eine konventionellen Konturierung der verlängerten Düse mit stetigem Konturverlauf an der Schnittstelle zwischen erstem Bereich 1 und zweitem, ausfahrbaren Bereich 5 vorgesehen, so würde ein abfallender Druckverlauf im zweiten Bereich vorliegen und die Düsenkontur würde keinesfalls der Kontur des Freistrahlrands in derjenigen Flughöhe H1 entsprechen, in der eine verlängerte Düse tatsächlich zusätzlichen Schub liefern kann. Folglich muss sich in einem solchen Fall der Freistrahl an die Kontur der Düse anpassen. Bei diesem dreidimensionalen Anlegevorgang kommt es zu erhöhten Seitenlasten. Außerdem führen die unterschiedlichen Konturen von Düse und Freistrahlrand zu erhöhten Wärmelasten während des Ausfahrvorgangs, da die Düse in den Randbereich des Freistrahls ausgefahren werden muss.

Die Idee der hier vorliegenden Erfindungsmeldung ist es nun, die Kontur des zweiten, ausfahrbaren Bereiches 5 in Anlehnung an die Kontur des Freistrahlrands 2 zum Zeitpunkt des Ausfahrens auszulegen, idealerweise (gegebenenfalls bis auf die mögliche Berücksichtigung von Interaktionseffekten wie des Ejektor-Effekts) entsprechend der Kontur des Freistrahlrandes 2 in der entsprechenden Flughöhe H1, in der ein Ausfahren des zweiten Bereiches 5 erfolgen soll, wie in Fig. 3 dargestellt. Bei einer derartigen Kontur des zweiten Bereiches 5 ist nur eine geringe, idealerweise keine Anpassung des Freistrahls an die Kontur notwendig. Da die Kontur des zweiten Bereiches 5 der Kontur des Freistrahls 2 sehr ähnlich ist, treten nur sehr geringe Seiten- und Wärmelasten während des Ausfahrvorgangs auf. Geringe Abweichungen der Düsenkontur von der Freistrahlkontur 2 können sich allenfalls durch eventuelle Anpassungen aufgrund des Ejektoreffekts während des Ausfahrvorgangs ergeben. Hierbei erniedrigt sich der Druck in der Nähe des Freistrahls gegenüber dem tatsächlichen Umgebungsdruck sobald eine Interaktion des zweiten Bereiches 5 mit dem Freistrahl 2 während des Ausfahrens erfolgt.

In jedem Fall besitzt die Kontur der Düse in ausgefahrenem Zustand, nun bestehend aus dem ersten Bereich 1 und dem zweiten Bereich 5, einen Knick zwischen den beiden Bereichen, da die Kontur des zweiten Bereiches 5 gegenüber der Kontur des ersten Bereiches 1 aufgeweitet ist. Dies ergibt sich, da der Freistrahl aufgrund der Unterexpansion in dem ersten Bereich 1 vor Ausfahren des zweiten Bereiches auf den jeweiligen Umgebungsdruck expandiert. Folglich ergibt sich für die Kontur des zweiten Bereichs 5 bei Vernachlässigung des oben beschriebenen Ejektoreffekts näherungsweise als Kontur einer Linie mit konstantem Druck, die dann nach erfolgtem Ausfahren zu einem konstanten Wanddruck an der Wand des zweiten Bereichs 5 führt. Eine derartige Kontur lässt sich beispielsweise mit dem an sich bekannten Charakteristikenverfahren erzeugen. Der Wanddruck ergibt sich dabei als Ergebnis einer Aufstiegsbahnoptimierung.

**Patentansprüche**

1.   Verfahren zur Verlängerung einer Düse für ein Raketentriebwerk, wobei mindestens ein zweiter Bereich (5) der Kontur der Düse als Verlängerung eines ersten Bereiches (1) der Kontur der Düse angeordnet wird, **dadurch gekennzeichnet, dass** die Verlängerung des ersten Bereiches (1) durch den zweiten Bereich (5) in einer Flughöhe erfolgt, in welcher der Umgebungsdruck kleiner ist als der mittlere Düsendruck der durch die Düse ausgestoßenen Antriebsstoffe am Ende des ersten Bereiches (1) und die Kontur des zweiten Bereiches im wesentlichen der Kontur des Freistrahles des Raketentriebwerkes entspricht.

2. Verfahren nach Anspruch 1, **dadurch gekennzeichnet, dass** die Verlängerung der Düse durch ein Ausfahren, Ausklappen oder Entfalten des zweiten Bereiches (5) in Längsrichtung der Düse erfolgt.

3. Verlängerbare Düse für ein Raketentriebwerk, wobei die Kontur der Düse in Längsrichtung der Düse einen ersten Bereich (1) mit einer ersten Kontur und mindestens einen zweiten Bereich (5) mit einer zweiten Kontur aufweist und der mindestens eine zweite Bereich (5) zur Verlängerung des ersten Bereiches (1) unter Ausbildung einer diskontinuierlichen Düsenkontur ausgebildet ist, **dadurch gekennzeichnet, dass** die Kontur des mindestens einen zweiten Bereiches (5) im wesentlichen an die Kontur des Freistrahles (2) in einer Flughöhe angepasst ist, in welcher der Umgebungsdruck kleiner ist als der mittlere Düsendruck der durch die Düse ausgestoßenen Antriebsstoffe und der mindestens eine zweite Bereich (5) in Längsrichtung der Düse ausfahrbar, ausklappbar oder entfaltbar ausgebildet ist.

**Claims**

1. Method for extending a nozzle for a rocket drive, at least a second area (5) of the contour of the nozzle being arranged as an extension of a first area (1) of the contour of the nozzle, **characterized in that** the extension of the first area (1) by the second area (5) takes place at a flight altitude at which the ambient pressure is smaller than the mean nozzle pressure of the propellants discharged through the nozzle at the end of the first area (1) and the contour of the second area basically corresponds to the contour of the open jet of the rocket drive.

2. Method according to claim 1, **characterized in that** the extension of the nozzle is achieved by extension, opening out or unfolding of the second area (5) in the longitudinal direction of the nozzle.

3. Extended nozzle for a rocket drive, the contour of the nozzle in the longitudinal direction of the nozzle having a first area (1) with a first contour and at least a second area (5) with a second contour and the at least one second area (5) for extension of the first area (1) being formed with the formation of a discontinuous nozzle contour, **characterized in that** the contour of the at least one second area (5) is basically matched to the contour of the open jet (2) at a flight altitude at which the ambient pressure is smaller than the mean nozzle pressure of the propellants discharged through the nozzle and the at least one second area (5) is formed so that it can be extended, opened out or unfolded in the longitudinal direction of the nozzle.

**Revendications**

1. Procédé pour allonger une tuyère pour un moteur-fusée, au moins une seconde zone (5) du contour de la tuyère étant disposée en tant que prolongement d'une première zone (1) du contour de la tuyère, **caractérisé en ce que** l'allongement de la première zone (1) par la seconde zone (5) est assuré à une hauteur de vol à laquelle la pression ambiante est inférieure à la pression de tuyère moyenne des matières propulsives éjectées par la tuyère à l'extrémité de la première zone (1), et le contour de la seconde zone correspond essentiellement au contour du jet libre du moteur-fusée.

2. Procédé suivant la revendication 1, **caractérisé en ce que** l'allongement de la tuyère est assuré par une sortie, un dépliement ou un déploiement de la seconde zone (5) dans la direction longitudinale de la tuyère.

3. Tuyère allongeable pour un moteur-fusée, le contour de la tuyère présentant dans la direction longitudinale de la tuyère une première zone (1) ayant un premier contour et au moins une seconde zone (5) ayant un second contour et la au moins une seconde zone (5) étant réalisée pour allonger la première zone (1) en réalisant un contour de tuyère discontinu, **caractérisée en ce que** le contour de la au moins une seconde zone (5) est essentiellement adapté au contour du jet libre (2) à une hauteur de vol à laquelle la pression ambiante est inférieure à la pression de tuyère moyenne des matières propulsives éjectées par la tuyère et la au moins une seconde zone (5) a une configuration amovible, dépliable ou déployable dans la direction longitudinale de la tuyère.

Fig. 1

Fig. 2

Fig. 3